Europäisches Patentamt

European Patent Office

Office européen des brevets

(11) Publication number: **0 318 208**
**A2**

## (12) EUROPEAN PATENT APPLICATION

(21) Application number: **88310881.3**

(22) Date of filing: **17.11.88**

(51) Int. Cl.⁴: **G05D 23/02 , F01P 7/16**

(30) Priority: **24.11.87 JP 294178/87**

(43) Date of publication of application:
**31.05.89 Bulletin 89/22**

(84) Designated Contracting States:
**DE FR GB IT SE**

(71) Applicant: **KUZE, Yoshikazu**
**31-3 Higashi Magome 1-chome**
**Ohta-Ku, Tokyo143(JP)**

(72) Inventor: **KUZE, Yoshikazu**
**31-3 Higashi Magome 1-chome**
**Ohta-Ku, Tokyo143(JP)**

(74) Representative: **Wood, Anthony Charles et al**
**Urquhart-Dykes & Lord 91 Wimpole Street**
**London W1M 8AH(GB)**

(54) **Thermo-actuator.**

(57) A thermo-actuator has a steel rod, a guide member slidably mounted on the rod, a seal spool secured to the guide member, a heat conductive cylinder secured to the guide member, and a wax provided in the cylinder. The seal spool has a thin thickness, so that the seal spool engages with the rod by a vacuum generated in the seal spool.

# FIG.1

Xerox Copy Centre

# THERMO-ACTUATOR

## BACKGROUND OF THE INVENTION

The present invention relates to a thermo-actuator provided in a wax-pellet thermostat for automotive engines and various thermo-sensors.

The thermo-actuator in the wax-pellet thermostat includes a steel rod, a guide member slidably engaged with the rod, a seal spool around the rod, a heat conductive cylinder secured to the guide member and exposed to a coolant, and a wax provided in the cylinder. The rod is sealed by a sealing device provided in the guide member.

When the temperature of the coolant rises in excess of a predetermined value of the thermostat, the wax expands. This forces the seal spool against the steel rod. As the wax squeezes the seal spool around the rod, the cylinder moves downward together with the guide member, thereby opening a valve. When the thermostat cools, the wax contracts, so that the seal spool expands.

On the other hand, the diaphragm portion of the seal spool at a cylindrical central portion has a relatively large thickness, for example, a thickness of 0.45% of the diameter of the rod. Accordingly, the restoring force of the seal spool to the original shape is very strong.

Accodingly, if the temperature of coolant rapidly decreases from high temperature (about 100° C) to low temperature (below 40° C), the seal spool rapidly expands by the restoring force to form a vacuum space therein. Thus, the coolant is inducted into the space.

Since the seal spool tightly grips the rod, the coolant in the space cannot be discharged. The valve is slightly raised by the coolant in the space, which causes the opening temperature of the valve to decrease. As a result, the engine is overcooled, thereby reducing the thermal efficiency of the engine and increasing the amount of emissions. The amount of the coolant in the space increases with time, so that the valve lift increases, which causes troubles of the engine.

## SUMMARY OF THE INVENTION

An object of the present invention is to provide a thermo-actuator where a seal spool has a thin thickness for preventing the formation of a vacuum space therein.

Another object of the present invention is to provide a thermo-actuator which is small in size.

Another object of the present invention is to provide a thermo-actuator which is provided in automotive engines for preventing the engine from overcooling and overheating.

A further object of the present invention is to provide a thermo-actuator which is provided in a thermo-sensor, thereby reducing the size of the sensor.

In the present invention, the thickness of the seal spool is 0.3% to 0.05% of the diameter of the steel rod. Thus, the inner wall of the seal spool tightly grips the rod by vacuum, thereby preventing the coolant from entering into the spool completely.

Even if the thickness becomes extremely thin, since a necessary volume of the wax in the cylinder is not changed, the diameter of the cylinder becomes small. If the size of the cylinder becomes small, the thickness of the wall of the cylinder can be reduced because of increase of the durability of the cylinder. Thus, the thermo-actuator is compact in size with a light weight.

In the present invention, since the coolant is not entered into the seal spool, the valve lift does not change. Accordingly, the opening temperature of the valve can be increased and thermal efficiency of the engine can be increased to reduce the amount of emissions.

The applicant conducted pressure-resistance tests of the seal spool having an extremely thin thickness for the thermo-actuator of the present invention. The tests are conducted under following conditions.

Pressure in the cylinder: zero to 90 kg/cm$^2$
Reciprocating stroke of the rod: 5 mm
Pressure application time: 4 seconds in one cycle
If the test reaches 35,000 cycles over a standard durability of 20,000 cycles, any abnormalities are not found out.

In an example of the present invention, the diameter of the rod is 2.5 mm and the thickness of the seal spool is 0.3 mm, which is 1/3.5 of the size of the conventional thermo-actuator.

By the test, it was confirmed that the seal spool having a thinner thickness was superior in durability. In the conventional seal spool having a thick seal spool, in order to deform the seal spool to move the cylinder, an excessive energy is consumed, so that the seal spool early wears by the repeated fatigue due friction between molecules of the material of the spool, with cracks.

The thermo-actuator of the present invention can be provided in a thermo-sensor, and the same effects as described above. that is, the outside liquid is prevented from entering into the actuator.

According to the present invention, there is provided a thermo-actuator having a rod, a guide member slidably mounted on the rod, a seal spool secured to the guide member at an end portion thereof, a heat conductive cylinder secured to the guide member and surrounding the seal spool, and a wax provided in the cylinder. The seal spool has a thin thickness, so that the seal spool engages with the rod by a vacuum generated in the seal spool.

In an aspect of the invention, the seal spool has a thickness between 0.3% and 0.05% of the diameter of the rod.

These and other objects and features of the present invention will become more apparent from the following description with reference to the accompanying drawings.

BRIEF DESCRIPTION OF DRAWINGS

Fig. 1 is a sectional view of a thermo-actuator for a thermostat according to the present invention;

Fig. 2 shows a negative pressure test of a seal spool provided in the thermo-actuator;

Fig. 3 is a side view of the seal spool of Fig. 2;

Fig. 4 is a front view of the same;

Fig. 5 is a sectional view of a conventional seal spool;

Figs. 6 and 7 are sectional views of a thermostat of the present invention;

Figs. 8 and 9 are sectional views of a conventional thermostat;

Fig. 10 is a graph showing valve lifts of the thermostat of the present invention and conventional one with respect to temperature;

Fig. 11 is a side view of a conventional thermo-actuator having a characteristic; and

Fig. 12 is a side view of the thermo-actuator of the present invention having the same characteristic as the thermo-actuator of Fig. 11.

DETAILED DESCRIPTION OF THE PREFERRED EMBODIMENT

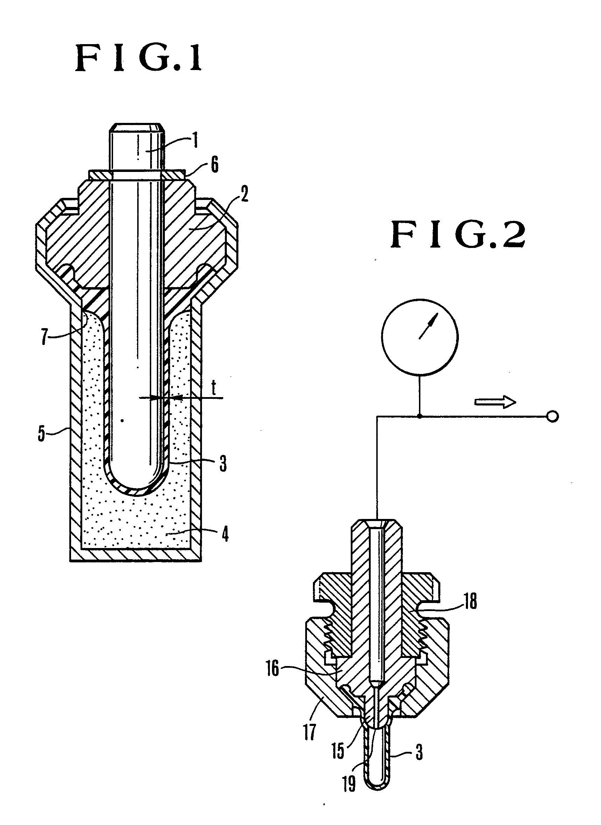

Referring to Fig. 1, a thermo-actuator of the present invention comprises a steel rod 1, a guide member 2 slidably engaged with the rod 1, a heat conductive cylinder 5 secured to the guide member 2, a seal spool 3 secured to the guide member 2, and wax pellet 4 provided in the cylinder 5. A snap ring 6 is engaged with the rod 1, for preventing the rod 1 from thrusting the bottom of the spool 3.

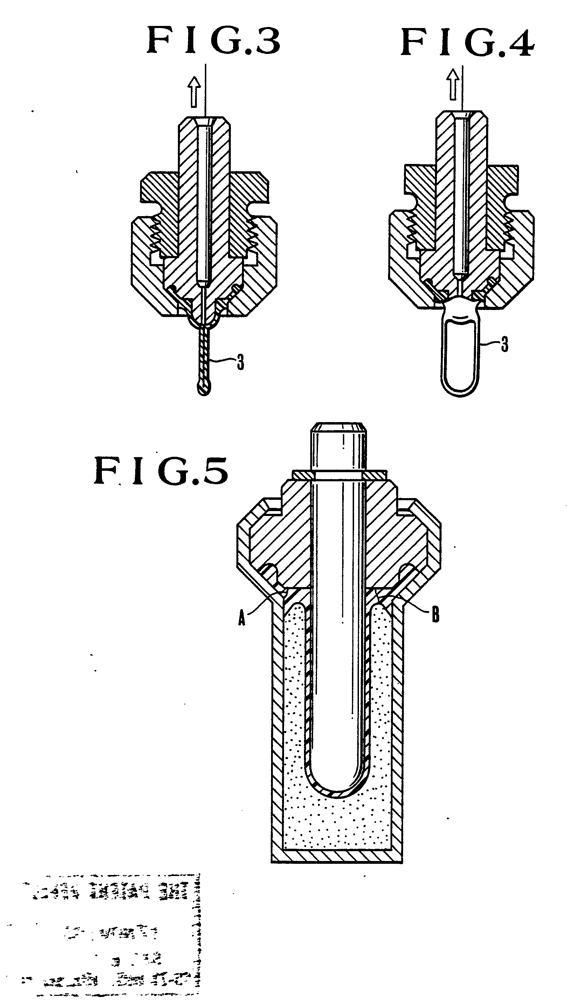

Figs. 2 to 4 show the seal spool connected to a vacuum pump through a connector, for negative pressure tests.

The connector comprises a guide member 16 having a projection 15 which has the same size and shape as an end portion of the steel rod 1, a cap screw 17 engaged with a flange of the seal spool 3, and a screw 18 screwed in the cap·screw 17 to grip the flange of the seal spool between the screw and the cap screw. The seal spool 3 is communicated with the vacuum pump through a central hole 19 formed in the guide member 16.

The thickness t (Fig. 1) of the cylindrical central portion of the seal spool is 0.12% of the diameter of the rod. When the negative pressure of 200 mmHg is applied, the spool is sucked so that the inner wall of the seal spool sticks to the projection 15 of the guide member 16. In this state, it will be understood that the outside liquid is preventing from entering in the seal spool. When the negative pressure of 350 mmHg is applied, the seal spool is entirely engaged with the projection 15.

As shown in Fig. 1. a skirt portion 7 of a base of the cylindrical portion of the seal spool adjacent the heat conductive cylinder has a rounded shape as a horn. This shape is available for increasing the durability of the seal spool.

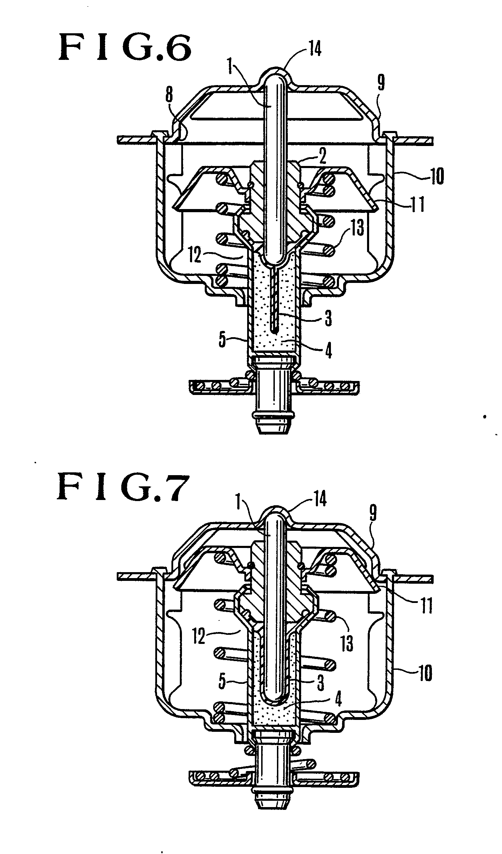

Fig. 5 shows a conventional seal spool where the base portion has a complicated shape so that cracks A and B occur.

Referring to Figs. 6 and 7, a thermostat to which the present invention is applied comprises a housing 9 forming a valve seat 8, a frame 10 secured to the housing 9. The thermo-actuator 12 shown in Fig. 1 is mounted in the thermostat. The steel rod 1 is secured to the housing 9 at a top 14. A primary valve 11 is secured to the guide member 2. A return coil spring 13 disposed surrounding the cylinder 5 is provided between the primary valve 11 and the bottom of the frame 10.

Fig. 7 shows a valve closed state. When the temperature of the coolant rises in excess of a predetermined value of the thermostat, the wax 4 expands. This forces the seal spool 3 against the steel rod 1. As the wax 4 squeezes the seal spool 3 around the rod 1, the wax 4 overcomes the coil spring 13 and the thermo-actuator 12 moves downward, thereby opening the valve 11. When the thermostat cools, the wax 4 contracts. Then the coil spring 13 returns the valve to the closed position as shown in Fig. 7.

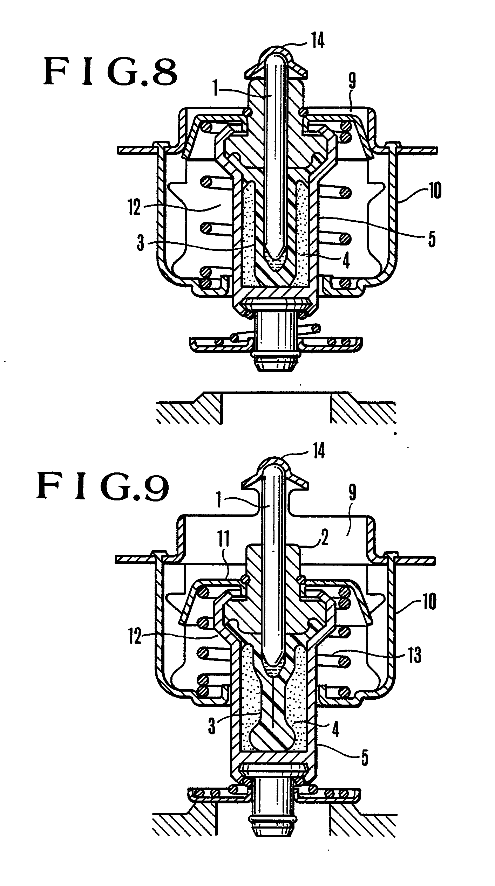

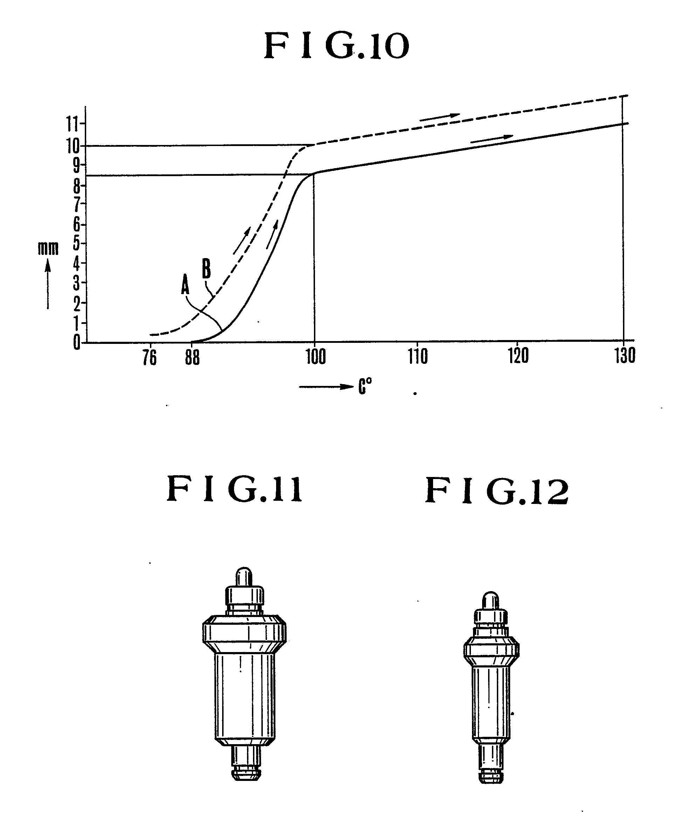

Figs. 8 and 9 show a conventional thermostat. A coolant is inducted in a space in the seal spool 3. Fig. 10 shows a valve lift curve A of the thermostat of the present invention shown in Figs. 6 and 7 and a valve lift curve B of the thermostat shown in Figs. 8 and 9.

The valve 11 of the thermostat of Fig. 9 in which the coolant is inducted in the seal spool 3 is fully opened at a temperature lower than that of the thermostat of the present invention shown in Fig. 6. Further, in the closing state, the valve 11 is not engaged with the valve seat 8, keeping a gap between the valve and the seat. Accordingly, the engine is overcooled.

Fig. 11 shows a conventional thermo-actuator and Fig. 12 shows a thermo-actuator of the present invention for the wax-pellet thermostat or for the thermo-sensor at the same scale as Fig. 11. It will be seen that the size of the thermo-actuator of the present invention is smaller than the conventional one.

While the invention has been described in conjunction with preferred specific embodiment thereof, it will be understood that this description is intended to illustrate and not limit the scope of the invention, which is defined by the following claims.

## Claims

1. A thermo-actuator having a rod (1), a guide member (2) slidably mounted on the rod, a seal spool (3) secured to the guide member at an end portion thereof, a heat conductive cylinder (5) secured to the guide member and surrounding the seal spool, and a wax (4) provided in the cylinder, characterized in that the seal spool has a thickness between 0.3% and 0.05% of the diameter of the rod.

2. The thermo-actuator according to claim 1 wherein the seal spool has a skirt portion having a horn shape at a base portion of a cylindrical portion of the seal spool adjacent the heat conductive cylinder.

# FIG.1

# FIG.2

EP 0 318 208 A2

# FIG.3

# FIG.4

# FIG.5

A

B

3

3

# F I G.6

# F I G.7

FIG.8

FIG.9

# F I G.10

# F I G.11

# F I G.12